# EUROPEAN PATENT APPLICATION

(11) **EP 1 443 406 A1**
(43) Date of publication of application: **04.08.2004**
(21) Application number: 02775509.9
(22) Date of filing: 08.11.2002
(51) Int. Cl.: G06F 12/14, H04N 7/16, G06F 17/60

(54) **INFORMATION DELIVERY APPARATUS, INFORMATION PROCESSING TERMINAL, EXTERNAL CONTENT STORAGE METHOD, EXTERNAL CONTENT OUTPUT METHOD, CONTENT DATA, OUTPUT CONTROL PROGRAM, AND INFORMATION DELIVERY SYSTEM**

(30) Priority: 08.11.2001 JP 2001343661
(71) Applicant: NTT DoCoMo, Inc., Tokyo 100-6150 (JP)
(72) Inventor: NAKAYAMA, Hirobumi, NTT DoCoMo, Inc., Chiyoda-ku, Tokyo 100-6150 (JP); MAEDA, Yoshiaki, NTT DoCoMo, Inc., Chiyoda-ku, Tokyo 100-6150 (JP); INOMATA, Toshihiro, NTT DoCoMo, Inc., Chiyoda-ku, Tokyo 100-6150 (JP); NAGAI, Riko, NTT DoCoMo, Inc., Chiyoda-ku, Tokyo 100-6150 (JP)
(74) Representative: HOFFMANN - EITLE
(86) International application number: PCT/JP2002/011651
(87) International publication number: WO 2003/040930

(57) **Abstract**

The present invention increases the diversity of usage of content while protecting a copyright of the content. Level determining means 22 specifies a content usage level of the content from among L1 through Ln stored in content files F1 through Fn. Control means 23 permits an information terminal to store files F1 through Fn in Internal memory 24 of the terminal or External memory 27, or output to a Built-in monitor 25 or an External monitor 26 or transfer via a Communication network 11 an image of the content.

## Description

### Technical Field

The present invention relates to an information distributing system and device and to a related method, computer program product, and to a device for storing and outputting content and content data, wherein each of the elements of the invention are especially suited to the distribution and storage of copyright protected content.

### Prior Art

Conventionally, to protect copyrighted content for distribution a method has been used whereby a content provider attaches a copy protection identifier to content to be distributed. For example, Japanese Patent Application No. 2001-167016 discloses a method whereby a purchaser of content is prohibited from copying purchased content to which an identifier is attached into an external storage device of a user terminal.

However, by limiting storage of protected content to an internal, integral, storage device of a user terminal, a capacity of such a storage device for other uses is necessarily limited. Thus, a problem exists in that a user may be forced to delete existing protected content from an internal, integral, storage device of a terminal in order to store new protected content. This is a particular problem in a case where protected content has been made available on a pay basis, and a user is forced to delete such content in order to store new content.

While the problem of the conventional art has been discussed above from a viewpoint of a content user, there also exists a problem from a viewpoint of a content provider.

With the recent rapid development of communication techniques, it has become necessary for a content provider to be able to distribute content to an ever-increasing number of users both securely and efficiently. While the conventional art referred to above provides a degree of security in that it prevents copyright protected content from being stored in a device external to a user terminal to which the content is provided, such a restriction inhibits user-demand for protected content due to the imposed storage restrictions.

### Disclosure of the Invention

It is thus an object of the present invention to provide a method that enables permitting copyright protected content to be utilized in a variety of ways, while preventing infringement of content copyright.

To achieve the stated object, the present invention provides an information distributing device comprising: a content permission setting means for setting a content usage permission level; and
an information distributing means for distributing to an information processing terminal content for which a permission level has been set.

The information distributing device assigns a content usage permission level and distributes the content accordingly. Thus, content can be used at a user terminal in a variety of ways without the copyright of the content being infringed.

The content usage permission level may comprise: one that permits a user terminal to store content only in a storage unit within the terminal; one that permits the content to be replayed only on the terminal into which it has been downloaded; one which permits the replaying of content only by a specified user regardless of the user terminal; one which permits the replaying of content only on devices conforming to a specified criteria; and permitting one that permits content to be stored in any device.

By employing content usage permission levels as described above, it is possible to write content data onto an external memory of a user terminal, transfer the content by e-mail, upload by a Web browser, and copy onto other devices without any restriction. It is also possible that any form of content usage is prohibited. Further, it is possible that content is permitted to be stored on an external memory under the condition that only the terminal which has downloaded the content can reproduce the content. In this case storage capacity of an internal memory of a terminal need not be reduced when storing content.

In addition, it is possible that a user who bought content is able to reproduce the content on another terminal. In other words, the user can interchange terminals for reproduction of the content without infringing on the copyright of the content. It is possible to write into a software the copyright status whether the reproduction of the content on any terminal is permitted or prohibited. Therefore, a memory slot adapted for storing content on a storage medium (memory) having a function of protecting a copyright need not necessarily be integrated into a device for reproduction. Furthermore, a user does not have to change hardware when reproducing content with a copyright protection. This means that a user is able to reproduce content on widely used devices.

It is possible that the content usage level comprises: a level for permitting the output of an image to a monitor of said terminal; a level for permitting the output of an image in a general analog form; and a level for permitting the output of an image in a general digital form. With such a configuration of content usage levels, it is possible to indicate in a software, if a content includes an image, that storing the content on an external memory and the output of the image is restricted. In other words, the usage level of an image included in the content can be set so as to comply with a copyright protection of the content.

It is preferred that information on the content usage level is stored in a comment area of the content file. By doing so, information on a content usage level can be embedded into content data without changing a data format of the content, so that a distributor of the content can restrict the usage of content from a user terminal. In addition, information written in the comment area does not affect the content data itself. Generally, the comment area is in conformity with a standard determined according to a file format. Thus a user can easily edit information at the output level using any suitable software, which is widely used.

It is preferred that the information distributing device further comprises a determining means for determining that a receiver of the content has a function of outputting the content according to the content usage level. The distributing means may distribute the content to the receiver on the basis of the determination result made by said determining means. By doing so, a distributor is able to prevent the transfer of content to a user terminal, which does not have a function of outputting content corresponding to the content usage level. Therefore, incorrect output of content by a user is prevented.

It is possible that the content usage level designates a receiver of the content and allows the information processing terminal to output the content to the receiver. For example, the content usage level comprises at least one of: a level for permitting said processing terminal to output the content to said information distributing device; a level for permitting said information processing terminal to output the content to said designated receiver; and a level for permitting said information processing terminal to output the content to a communication device to which an address for communication including at least a part of a designated address is assigned. Namely, content usage is controlled by outputting content only to a designated communication device.

It is possible that the content usage level designates content outputting means of said information and permits said information processing terminal to output the content to a communication device. For example, the content usage level comprises at least one of: a level for permitting said information processing terminal to output content to the communication terminal using an e-mail transmitting/receiving means; a level for permitting said information processing terminal to output content to the communication device using a communication means for transmitting content to a communication device without an e-mail. Namely, content outputting means integrated into a user terminal can be controlled.

Further, the present invention provides an information processing terminal comprising: means for specifying a content usage level representing whether to permit output of content by referring to content file of the content; and means for controlling output of the content according to the content usage level. The information processing terminal outputs content according to a content usage level, thus a wide variety of content usage is possible without infringing on a copyright of a content.

Still further, the present invention provides a method for storing content comprising the steps of: downloading content in which a content usage level is set, which indicates whether to permit output of the content; and controlling output of the content according to the content usage level. By using this method, a user of a user terminal is able to store a downloaded content to an external device according to a content usage level, thereby not reducing the internal storage capacity of the external device when storing the content.

It is preferred that the content usage level comprises: a first level for permitting to store the content in an internal storage unit; a second level for permitting to relay only on a terminal which has downloaded the content; a third level for permitting only a single user to replay the content; a fourth level for permitting communication devices following a same criteria to replay the content; a fifth level for permitting any device to replay the content.

The content may have at least one of several usage levels indicating that output of the content is permitted. A first identifier, which indicates that the output of the content is permitted on any of the first through the fifth levels; a second, on any of the first through the fourth levels; a third, on any of the first through the third levels; a fourth, on the first or the second level; a fifth identifier, which indicates that the output of the content is permitted on the first level.

In this case, if the first identifier is assigned to the content, an output on any of the first through the fifth levels is permitted; if the second identifier is assigned to the content, an output on any of the first through the fourth levels is permitted; if the third identifier is assigned to the content, an output on any of the first through the third levels is permitted; if the fourth identifier is assigned to the content, an output on both the first and the second levels is permitted; and if the fifth identifier is assigned to the content, an output on only the first level is permitted.

Namely, attaching an identifier to content as described above, enables storing of content in an external memory and reproduction of content on: only a terminal that has downloaded the content; other terminals in addition to the terminal; or on any terminal, which protects stored content from being copied. Therefore, reproducing, storing, and transferring will not infringe on the copyright of the content.

Still further, the present invention provides a method for outputting content comprising the steps of: downloading content in which acontent usage level is set, which indicates whether to permit output of an image of the content; and controlling output of the image according to the content usage level. Using this method, a user terminal that downloads content can be permitted to output an image included in the content according to acontent usage level. In other words, an output of the image can be controlled so as to not infringe on the copyright of the content.

It is preferred that the content usage level comprises: a first level for permitting the output of the image to a built-in monitor; a second level for permitting the output of the image in a general analog form; a third level for permitting the output of the image in a digital analog form.

The content may have at least one of several identifiers indicating that usage of the content is permitted. A first identifier, which indicates that the usage of the content is permitted on any of the first through the fifth levels; a second identifier for both, the first and the second levels; and a third identifier for only the first level.

In this case if the first identifier is assigned to the content, an output on any of the first through the fifth levels is permitted;
if the second identifier is assigned to the content, an output on the first and the second levels is permitted; if the third identifier is assigned to the content, an output on only the first level is permitted.

As described above, configuring content usage levels, and attaching an identifier to content places restriction on the outputting of the content, therefore, enabling the protection of a copyright without any change in hardware of a user terminal.

Still further, the present invention provides content data having information on content usage level indicating whether or not usage of the content is permitted.

It is important to note that content usage permission is set for all content distributed. Thus, a wide variety of content usage is possible without infringing on copyright.

It is preferred that the content usage level comprises: a level for permitting only a terminal with which the content was downloaded to replay the content; a level for permitting only a single user to replay the content; a level for permitting only devices following a same criteria to replay the content; and a level for permitting any device to store the content.

Introduction of these levels enables: the writing of content data to an external memory, the transfer by e-mail, the uploading by a web browser, and copying to other devices without any restriction. It is possible that any form of content usage is prohibited. Further, it is possible that content is permitted to be stored in an external memory device under the condition that only the terminal which has downloaded the content can reproduce the content. In this case the capacity of an internal memory of a terminal need not be utilized for storing the content.

It is also possible that the content usage level comprises: a level for permitting the output of an image to a built-in monitor of said terminal; a level for permitting the output of the image in a general analog form; and a level for permitting the output of the image in a general digital form.

With a configuration of content usage levels such as the above described, an output of the image included in content can be controlled in addition to storing the content in an external memory device. In other words, an output of an image included in content protected by a copyright can be controlled in various ways.

Still further, the present invention provides a computer program product to enable a computer to execute the functions of: specifying acontent usage level representing whether to allow usage of content by referring to content file of the content; and controlling usage of the content according to the content usage level.

Therefore, if a user terminal does not have a function of outputting content to an external device, a user of the user terminal is able to receive content protected by a copyright by installing the above output controlling program to the terminal without any change in hardware of the terminal.

Still further, the present invention provides an information distributing system comprising an information distributing device and an information processing terminal. The device comprises means for assigning to content ausage level indicating whether to permit usage of the content; and means for distributing to an information processing terminal the content in which the content usage level is assigned. The terminal comprises means for specifying acontent usage level of the distributed content and means for controlling usage of the content according to the content usage level.

In this system, the information distributing device grants usage permission to each content and distributes the content. And the information processing terminal is permitted to use the content on the basis of the content usage level. Therefore, a wide variety of content usage is possible without infringing on copyright.

### Brief Description of the Drawings

Fig. 1 is a block diagram illustrating the overall configuration of a system according to a first embodiment of the present invention.
Fig. 2 exemplifies content usage levels for storing each of which is set in content in the first embodiment.
Fig. 3 exemplifies content usage levels for outputting images each of which is set in content in the first embodiment.
Fig. 4A exemplifies a configuration of content attaching acontent usage level.
Fig. 4B exemplifies a configuration of content attaching a content usage level.
Fig.5 is a block diagram illustrating an overall configuration of an information distributing system according to service example 1 of a second embodiment of the present invention.
Fig. 6 is a sequence diagram illustrating example 1 of operation of an information distributing system relating to a service example according to the second embodiment of the present invention.
Fig.7 is a block diagram illustrating an overall configuration of an information distributing system relating to service example 2 according to the second embodiment of the present invention.
Fig. 8 is a sequence diagram illustrating an example of operation of an information distributing system relating to service example 2 according to the second embodiment of the present invention.
Fig. 9 is a sequence diagram illustrating an example of operation of an information distributing system relating to service example 2 according to the second embodiment of the present invention.
Fig. 10 is a block diagram illustrating an overall configuration of an information distributing system relating to service example 3 according to the second embodiment of the present invention.
Fig. 11 is a sequence diagram illustrating example 2 of operation of an information distributing system relating to service example 3 according to the second embodiment of the present invention.
Fig. 12 is a block diagram illustrating an overall configuration of an information distributing system relating to service example 4 according to the second embodiment of the present invention.
Fig. 13 is a flowchart showing operation of a terminal according to a fourth embodiment of the present invention.

### Best mode for carrying out the invention

Embodiments of the present invention will now be described referring to the drawings.

### (First embodiment)

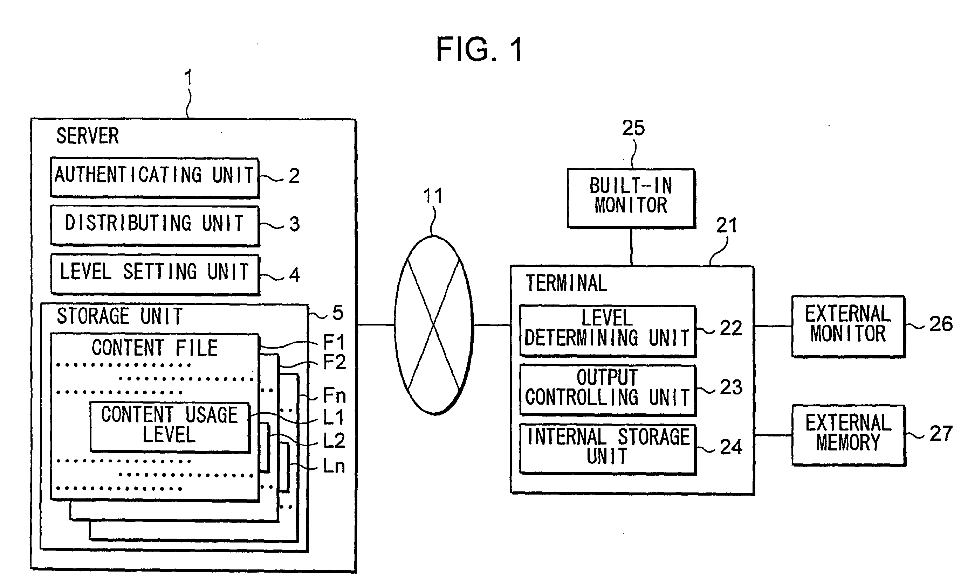

Fig. 1 is a block diagram illustrating an overall configuration of a system according to a first embodiment of the present invention.

Server 1 has a hardware configuration similar to a general server having a Central Processing Unit (CPU), memory, communication interface and other units. As shown in Fig. 1, Server 1 includes authenticating unit 2, distributing unit 3, level setting unit 4, and storage unit 5, each of which is controlled by the above hardware and a software stored in the memory. Storage unit 5 stores files of content such as an image, music, text, and a computer program (hereinafter referred to as content file F1 through Fn).

Each of content usage levels L1 through Ln is set to each of the content files F1 through Fn. Each of the levels L1 through Ln represents a level of copyright protection of content for outputting content from terminal 21 to other devices. Specifically, each of the levels L1 through Ln includes content usage levels for storing content in an external device and for usage of an image included in content, for example.

The level for storing in an external device represents a level of copyright protection of content for storing in a storage medium except for an internal storage unit of Terminal 21, on the precondition that the terminal is permitted to store content in the internal storage medium.

Level setting unit 4 sets a content usage level to content according to direction given by content provider. Authenticating unit 2 checks whether a user terminal to which content is provided has a function of outputting to an external device corresponding to the content usage levels L1 through Ln. If Authenticating unit 2 has determined that output device has a function corresponding to one of the content usage levels L1 through Ln, Distributing unit 3 distributes content to the device.

Terminal 21 has a hardware configuration similar to a general server including a Central processing unit (CPU), memory, communication interface and other units. As shown in Fig. 1, Terminal 1 includes level determining unit 22, output controlling unit 23, and internal storage unit 24, each of which is controlled by the hardware and software stored in the memory. Terminal 21 is, for example, a mobile phone, personal handy phone system (PHS), fixed phone, personal computer, and personal digital assistants (PDA).

Terminal 21 is connected to built-in monitor 25, external monitor 26, and external memory 27. External memory is, for example, a hard disk, floppy ™ disk, optical disk, and memory card. Terminal 21 is also connected to Server 1 via communication network 11. For example, Communication network 11 is configured with a telephone line, ISDN, LAN, Internet, mobile network, PHS network, satellite network, and wireless data communication network using Bluetooth ™.

Level determining unit 22 determines a content usage level of each of the content files F1 through Fn among levels L1 through Ln. Output controlling unit 23 controls output of content on the basis of the determined content usage level.

Formats of content files F1 through Fn are, for example, Joint Photographic Experts Group (JPEG), Graphics Interchange Format (GIF), Portable network graphics (PNG), Music instrument Digital Interface (MIDI), Advanced Streaming Format (ASF), Moving Picture Experts Group (MP4).

As described above, a content provider can set, in advance, a content usage level among level L1 though Ln for each of the content files F1 through Fn, which is stored in Server 1. Level setting unit 4 writes content usage levels L1 through Ln into a comment area of each of the content files F1 through Fn.

When Server 1 receives a request for distribution of content from Terminal 21, Authenticating unit 2 determines whether Terminal 21 has a function of outputting content to an external device corresponding to the levels L1 through Ln. The determination is carried out according to a predetermined procedure. Specifically, at first Server 1 makes an inquiry to Terminal 21 and Terminal 21 responds to the inquiry.

If Terminal 21 has the function corresponding to content usage levels L1 through Ln, Distributing unit 3 reads out from Storage unit 5 one of the content files F1 through Fn to transmit to Terminal 21. In the following description, content file F1 shall be read out.

When Terminal 21 receives content file F1 sent form Server 1, Level setting unit 22 determines a content usage level of file F1 among levels L1 through Ln. Next, Output controlling unit 23 deals with the content files on the basis of the determined content usage level. Specifically, Output controlling unit 23 permits the storing of the files in Internal storage unit 24 or External memory 27, to output images included in the files to Built-in monitor 25 or External monitor 26, and to transfer the files to other devices via Communication network 11, for example.

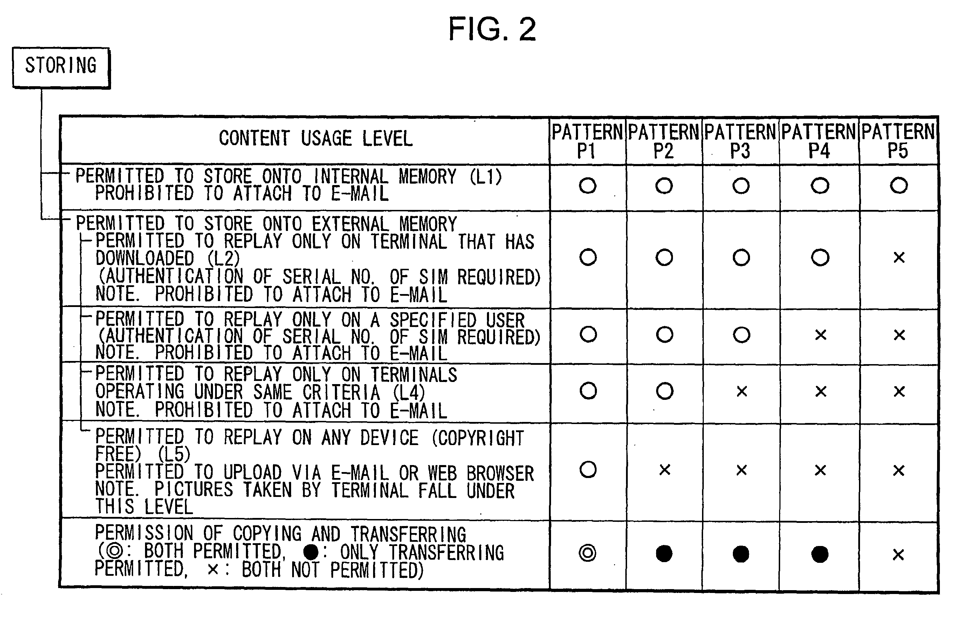

Fig. 2 shows an example of a configuration of content usage level for storing content in an external device according to the first embodiment. In the figure, a circle indicates that content usage is permitted and a cross indicates that content usage is not permitted.

As shown, configuration of content usage levels is comprised of level L1 at which storing the content in Internal storage unit 24 is permitted; level L2 at which reproduction of the content only on Terminal 21 which has downloaded the content; level L3 at which reproduction of the content is permitted only on terminals of same owner; level 4 at which reproduction of the content is permitted only on devices operating under the same criteria; and level 5 at which storing of the content is permitted on any device.

Namely, storing content only on Internal storage 24 is permitted at Level 1. However, attachment of content to an e-mail transmitted from Terminal 21 is prohibited.

Storing content in External memory 27 and reproduction of content only on Terminal 21 that has downloaded the content are permitted at Level L2. However, attachment of content to an e-mail transmitted from Terminal 21 is prohibited. It is noted that identification information of Terminal 21 is necessary in order to enable reproduction of the content only on Terminal 21, which has downloaded the content. For example, if Terminal 21 is a mobile phone for being used with a Subscriber Identity Module (SIM) or a User Identity Module (UIM) inserted thereto, Terminal 21 stores content in Internal memory 27 or External memory 27 in association with a serial number of SIM or UIM. When reproducing the content, Terminal 21 reads out a serial number of SIM (UIM) currently inserted in Terminal 21 from the SIM (UIM). Terminal 21 then compares the number stored in association with the content and that read out from SIM (UIM). If both numbers coincide, Terminal 21 gives a user permission to reproduce the content. It is possible that a serial number of Terminal 21 is utilized for the above processing in addition to the number of SIM (UIM). In this case, usage of content will be more tightly controlled.

At Level L3, storing of content on External memory 27 is permitted. It is noted that different terminals 21 used by a same user can reproduce the content. However, attachment of content to an e-mail transmitted from Terminal 21 is prohibited. It is noted that identification information of Terminal 21 is necessary for reproduction of the content on different Terminals 21 used by a same user. As an example, if Terminal 21 is a mobile phone for being used with a Subscriber Identity Module (SIM) or a User Identity Module (UIM) inserted thereto, Terminal 21 stores content on Internal memory 24 or External memory 27 in association with a phone number stored in SIM or UIM. When reproducing the content, Terminal 21 reads out a phone number from SIM (UIM) currently inserted in the Terminal 21. Terminal 21 then compares the number stored in association with the content and that read out from SIM (UIM). If both numbers coincide, Terminal 21 give a user permission to reproduce the content.

At Level L4, storing of content in External memory 27 of Terminal 21 is permitted. It is noted that reproduction of content on Terminal 21 operating under a same criteria is permitted regardless of users of the terminal. Here, "a device operating under a same criteria" means a device that has a function of restricting output of content. Specifically, Terminal 21 is a mobile phone. After downloading content, the mobile phone outputs the content to an audio device having the above function and the content is reproduced on the audio device, for example. However, attachment of content to an e-mail transmitted from Terminal 21 is prohibited.

At Level L5, storing content in External memory 27 and reproduction of content on any device are both permitted. In addition, attaching content to an e-mail transmitted from Terminal 21 and uploading content with a web browser executed on the terminal are permitted. Namely, content of Level L5 is to be treated as copyright free content. As an example, if a Terminal integrates a camera, any picture taken by the camera falls under Level L5.

Patterns P1 through P5 are provided each of which is defined as a combination of content usage levels L1 through L5, for example. In Pattern P1, usage of content at Levels L1 through L5 are all permitted. In pattern P2, usage at Levels L1 through L4 are permitted. In Pattern P3, usage at Levels L1 through L3 are permitted. In Pattern 2, usage at Levels L1 and L2 are permitted. In Pattern P5, usage at only Level L1 is permitted.

Furthermore, in Pattern P1, copying and transferring content are permitted. In Pattern P1 through P4 only transferring is permitted. In Pattern P5 both copying and transferring are prohibited. "Transferring" content means to move the content file to another place, in other words, to move the content data, as well as having the right to deal with the content. Needles to say, there is no content file left in the original place. Therefore, output of content including writing in an external memory, transferring via e-mail, uploading by a web browser, and copying is permitted without any restriction. In effect, such content can be treated as, so called, copyright-free content. It is noted that all the images and music generated on Terminal 21 comes under Pattern P1.

In Pattern 2 reproduction of content is permitted on any device, which prohibits the copying of the content. In other words, a user can deal with such content as in an ordinary audio CD. Thus, a user does not have to change hardware of a device, for example, adding a slot for reproducing the content to the device. This means that a user is able to reproduce content on widely used devices. As an example, a user may output content to a car stereo to reproduce it.

A user who bought content of Pattern P3 can reproduce the content on any terminal. Namely, a user can reproduce content on different terminals. The user is identifiable, for example, by a phone number. For example, since a terminal compatible with International Mobile Telecommunication (IMT) can mount different SIMs interchangeably, content of Pattern P3 can be reproduced on different terminals mounted with a SIM storing the same phone number. In this case when the SIM is replaced with a SIM storing another telephone number, the terminal cannot reproduce the content. It is possible, however, that when the SIM is dismounted the terminal continues to reproduce it.

Content of Pattern P4 can be stored on External memory 27 when Internal storage unit 24 has enough capacity left to store the content, thereby saving storage capacity of Internal storage unit 24. It is noted that such content can only be reproduced on Terminal 21 that has downloaded the content, and can be reproduced on Terminal 21 without a SIM. However, when other SIMs are mounted onto the terminal, the terminal cannot reproduce the content.

In Pattern P5 all usage of content including writing onto an external memory, transferring via e-mail, uploading by a web browser, and copying is prohibited. Only storing content in Internal storage unit 24 of Terminal 21 is permitted.

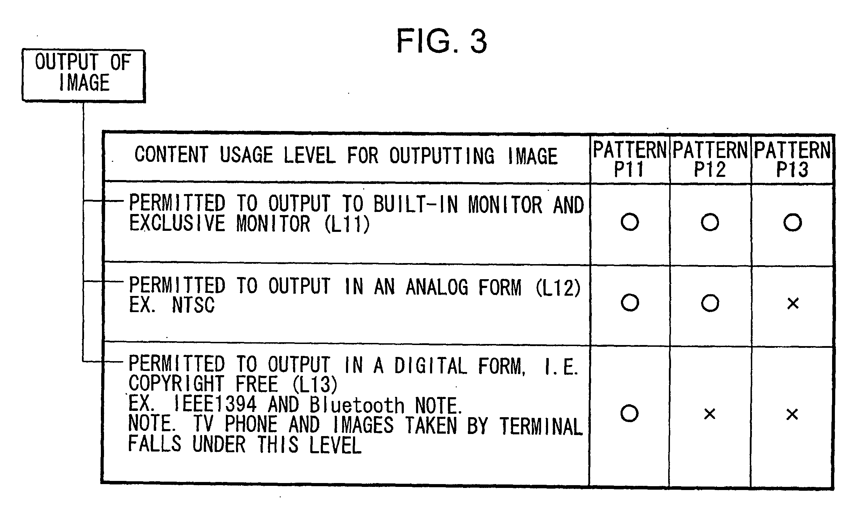

Fig. 3 exemplifies content usage levels for outputting images included in content, each of which is set for the content according to the first embodiment. In the figure, a circle indicates that usage of content is permitted and a cross indicates not permitted.

As shown therein, the configuration of content usage level described above is comprised of level L11 at which output of the content to a built-in monitor is permitted; level L12 at which output in a general analog form is permitted; and level L13 at which output in a general digital form is permitted.

Namely, output of an image included in the content of Level L11 to Built-in monitor 25 (or an exclusive monitor) is permitted. Output to External monitor 26 is prohibited.

Content of Level L12 is permitted to be output in a general analog form such as an NTSC format.

Content of Level L13 is permitted to be output in a general digital form and thus is practically treated as copyright-free content. Specifically, any image transferred via a TV-phone and generated on Terminal 21 falls under Level 13. Output of content in the digital form may be carried out via IEEE1394 or Bluetooth, for example.

Patterns P11 through P13 are provided each of which is defined as a combination of content usage levels, for example. In Pattern P11, usage of content at Levels L11 through L13 are permitted. In pattern P2, usage at Levels L11 and L12 are permitted. In Pattern P3, usage only at Level L11 is permitted.

It is possible that identifiers of P1 through P5 shown in Fig. 3 and P11 through P13 are written in a comment area of Content files F1 through F5. For example, identifiers may be written on a comment field for JPEG and MP3, on Description [0] field in a Mobile profile for ASF and WMA, and on a copyright notice of MetaEvent (a first event of a track chunk) for MIDI-SMF.

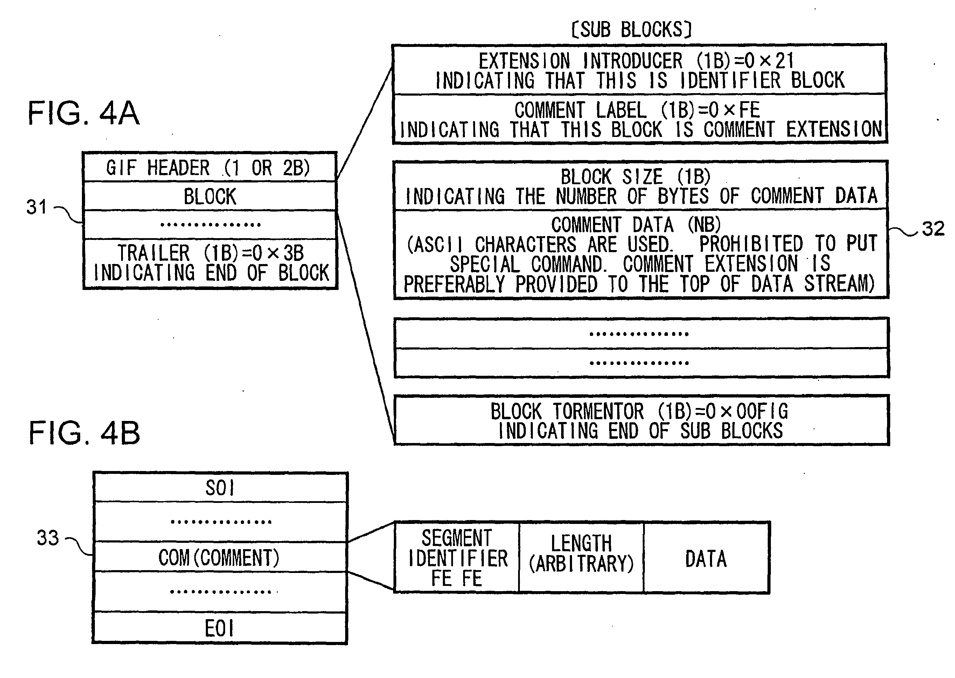

Figs. 4A and 4B show structures for a content file according to the first embodiment of the present invention. A structure shown in Figs. 4A and 4B are adopted when the content file is made in a GIF format and a JPEG format, respectively.

As shown in Fig. 4A, when the content files F1 through Fn are made in a GIF format, content usage levels L1 through Ln are written in Comment extension field 32 within a Block.

As shown in Fig. 4B, when the content files F1 through Fn are made in a JPEG format, content usage levels L1 through Ln are written in Comment field 33.

### (Second embodiment)

It is possible to provide other content usage levels different from that of the first embodiment. Simply put, the details of content usage levels can be provided in various ways as long as the copyright of the content is not infringed upon.

For example, it is possible that a content usage level designates an output device and allows Terminal 21 to output the content only to the output device. Also, it is possible that a usage level designates a means for outputting content within Terminal 21 and allows Terminal 21 to output content only with the designated means. Examples of content usage levels will now be described along with services provided. In the following description, content output levels shall be set in a similar way as shown in Figs. 2 through 4.

### (Service example 1)

In service example 1, after downloading content from Server 1, Terminal 21 uploads the content to Server 1. Next, Server 1 processes the content and Terminal downloads the processed content. Types of content suitable for service example 1 are, for example, an image data of a character capable of changing shape, music data capable of changing its tone quality, and a computer program of which version can be updated.

In service example 1, Server 1, which is managed by a content provider, acts as the above output device of Terminal 21. In this case, outputting content to a content provider having a copyright of the content must not be a seen as a copyright infringement. Therefore, in service example 1, an content usage level for designating Server 1 is set in a content file and thus Terminal 21 is permitted to output the content to Server 1.

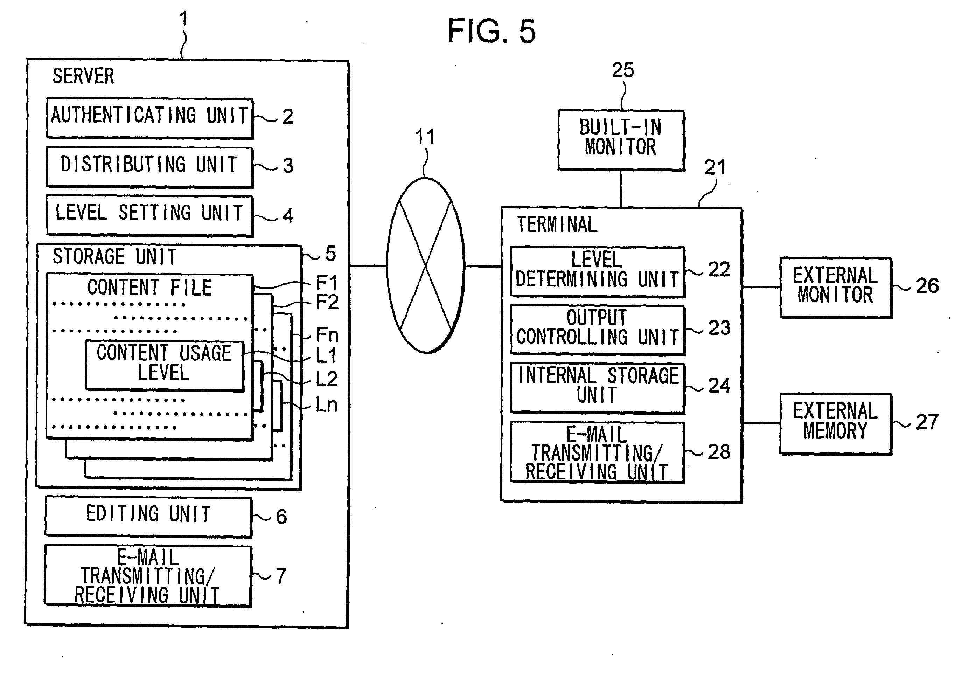

Fig.5 is a block diagram showing an overall configuration of an information distributing system for providing service example 1. In the figure, like numerals are employed for like elements and a detailed description is omitted.

Server 1 includes editing unit 6 for editing content uploaded by Terminal 21 and e-mail transmitting/receiving unit 7 for transmitting and receiving e-mails via Network 11, in addition to Authenticating unit 2, Distributing unit 3, Level setting unit 4, and Storage unit 5 as shown in Fig. 1. Terminal 21 includes e-mail transmitting/receiving unit 28 for transmitting and receiving e-mails via Network 11 in addition to Level determining unit 22, Output controlling unit 23, and Internal storage unit 24 shown in Fig. 1.

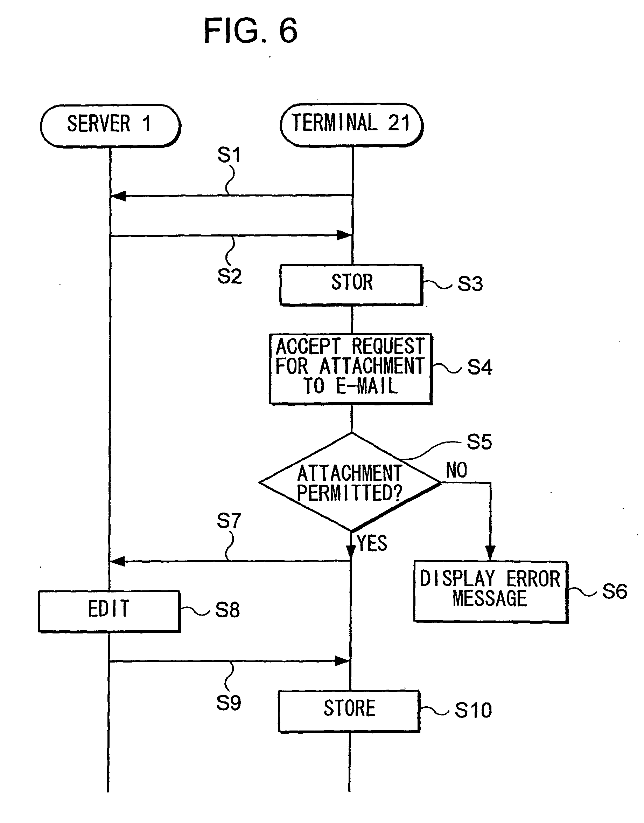

Operation of the information distributing system will now be described with reference to a sequence diagram of Fig. 6.

In Fig. 6, Terminal 21 at first transmits a request for downloading content to Server 1 according, for example, to Hypertext Transfer (HTTP) protocol (step S1). Upon receipt of the request, Server 1 checks functions of Terminal 21 using Authenticating unit 2 and reads out a content file storing content from Storage unit 5. In the following example, content file F1 shall be read out. Distributing unit 3 transmits file F1 to Terminal 21 as an HTTP response (step S2). It is noted that an e-mail address of Server 1 and acontent usage level, indicating that content usage is permitted, is to be attached to the e-mail transmitted to Server 1. Upon receipt of file F1, Terminal 21 stores F1 in Internal storage unit 24 (step S3).

When a user of Terminal 21 wants to process file F1 stored in Internal storage unit 24, the user carries out an operation in Terminal 21 to create an e-mail addressed to Server 1. At first, a user inputs an address of Server 1 in Terminal 21 and carries out necessary operation in Terminal 21 for attaching file F1 to the e-mail. Terminal 21 accepts and interprets these operations (step S4). Next, Level determining unit 22 determines whether attachment of file F1 to an e-mail is permitted (step S5). Specifically, Level determining unit 22 checks content usage level written in a comment area of file F1 to compare an e-mail address input by the user with an address stored in the area. If both addresses are the same, Level determining unit 22 determines that attachment of the content is permitted. If not, the attachment of the content is determined as not permitted.

If the attachment is determined as not permitted ("No" in step S5), Output controlling unit 23 displays an error message on Built-in monitor 25 (step S6).

If the attachment is permitted ("Yes" in step S5), e-mail transmitting/receiving unit 28 attaches file F1 to an e-mail transmitted to Server 1 (step S7).

Upon receipt of the e-mail by Server 1, Editing unit 6 processes file F1 according to a predetermined procedure (step S8). Next, E-mail transmitting/receiving unit 7 transmits an e-mail attaching file F1 to Terminal 21 (step S9). Upon receipt of the e-mail, Terminal 21 updates file F1 stored in Internal storage unit 24 to the one received (step S10).

As described above, in service example 1, the content usage level designates an output device of content (namely Server 1) and represents that output of content to the designated device by Terminal 21 is permitted. Namely, output of content is limited to a designated device.

### (Service example 2)

In service example 2, Terminal 21 uploads content generated on Terminal 21. Server 1 processes the content and Terminal 21 downloads it. For example, a case suitable for service example 2, would be one, where a user asks Server 1 having various functions of image processing to process pictures taken by Terminal 21 to look good, or for fun. A user may ask Server 1 having a sophisticated function of sound processing to edit music data generated on Terminal 21 to improve quality of the data.

In this case, since Terminal 2 originates content, it could be thought that Terminal 21 is essentially permitted to output the content to any device. However, since Server 1 does contribute to the generation of the content in final form, output of the content has to be restricted by the content provider. In the following example, a case where a content provider allows Terminal 21 to output content only in a way the content is attached to an e-mail will be described.

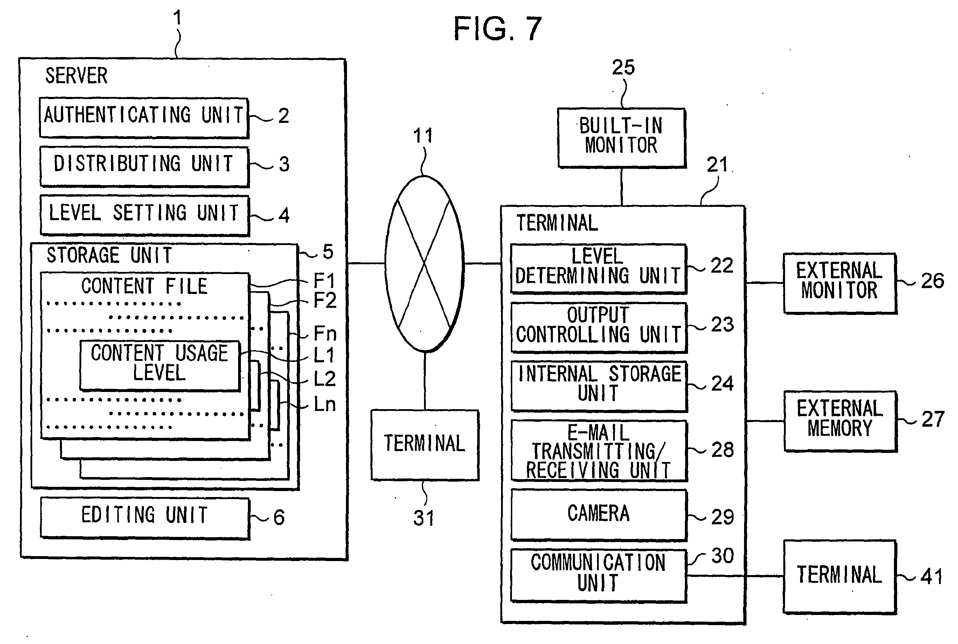

Fig.7 is a block diagram showing an overall configuration of an information distributing system for providing service example 2. In the figure, like numerals of Fig. 1 are attached to like elements of Fig. 1. Detailed description of it is omitted.

The information distributing system includes terminals 31 and 41 in addition to Server 1 and Terminal 21 of Fig. 1. Terminal 31 can exchange e-mails with Terminal 21 via Network 11 and Terminal 41 can carry out data communication with Terminal 21 via a cable.

Server 1 includes Editing unit 6 for editing content uploaded from Terminal 21 in addition to Authenticating unit 2, Distributing unit 3, Level setting unit 4, and Storage unit 5. Terminal 21 includes e-mail transmitting/receiving unit 28, camera 29 such as a CCD camera, and communication unit 30 for carrying out communication with Terminal 41 via a cable.

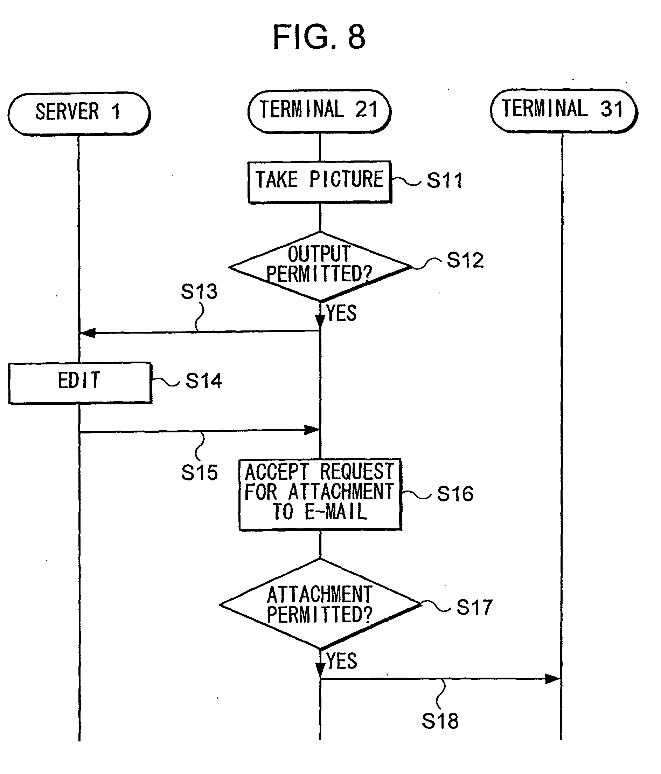

Operation of the system will now be described referring to a sequence diagram of Fig. 8.

At first, Terminal 21 takes a picture of a person or a landscape and stores the image data in Internal storage unit 24 according to a user's instruction (step S1). Next, Terminal 21 establishes a connection between Server 1 via Communication Network 11 according to a user's instruction. When the user provides Terminal 21 an instruction for downloading of the image data, Terminal 21 determines whether the image data is permitted to be output to an external device (step S12). Since any content usage level can be set to the image data, Level determining unit 22 of Terminal 21 determines that the image data is permitted to be output ("Yes" in step S12) and thus transmits the data to Server 1 (step S 13).

Upon receipt of the image data, Server 1 processes the data according to a predetermined procedure (step S14) and transmits it to Terminal 21 as content file F1 (step S15). Terminal 21 stores file F1 on Internal storage unit 24. It is noted that acontent usage level is written in the comment area of file F1, which indicates that, only attachment of the data of file F1 to an e-mail is permitted.

When the user of Terminal 21 wants to output file F1 stored in Internal storage unit 24 to Terminal 31, the user carries out an operation for making an e-mail addressed to Terminal 31. Specifically, at first the user inputs to Terminal 21 the e-mail address of Terminal 31. Next, the user carries out an operation to give Terminal 21 an instruction for attaching file F1 to the e-mail.

In step S16 Terminal 21 accepts the operation. Level determining unit 22 determines whether attachment of the file to e-mail F1 is permitted. Since the content usage level for permitting attachment to an e-mail is written in the comment area, Level determining unit 22 permits the attachment of file F1 to the e-mail and thus Terminal 21 transmits the e-mail with an attachment of file F1 to Terminal 31 (step S18).

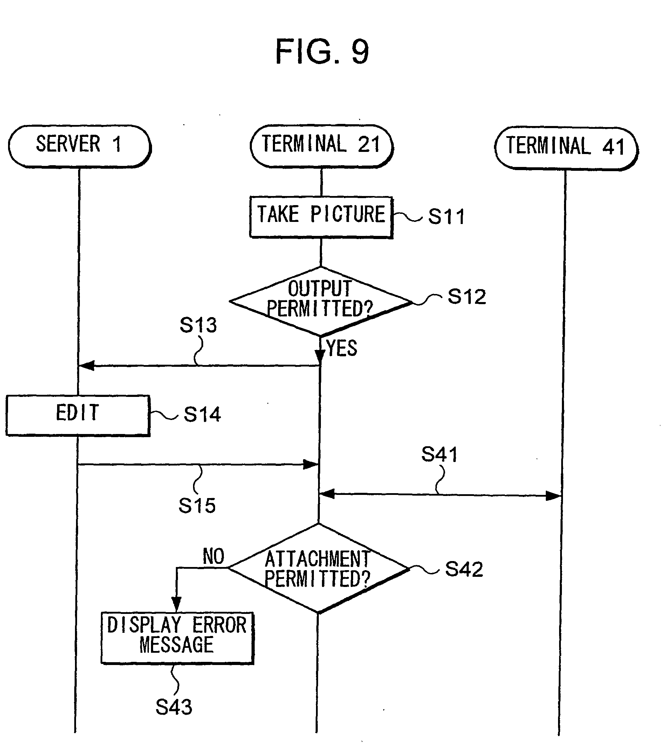

Fig. 9 shows an operation when Terminal 21 outputs file F1 to Terminal 41. In Fig. 9, steps S11 through S15 are the same as those of Fig. 8 and thus explanation of those is omitted. After completion of step S15, when the user wants to output file F1 stored in Internal storage unit 24 to Terminal 41, the user connects Terminal 21 with Terminal 41 physically via a cable to establish a communication link between Terminals 21 and 41 (step S41).

Next, the user gives Terminal 21 an instruction for outputting the file F1 stored in Internal storage unit 24 to Terminal 41. Upon receipt of the instruction, Level determining unit 22 determines whether output of file F1 is permitted (step S42). As described above, the content usage level written in the comment area of file F1 indicates that only attachment of the content to an e-mail is permitted, thus Level determining unit 22 determines that the content is not permitted to be output via a cable. In step S43, Level controlling unit 23 displays an error message on Built-in monitor 25.

Simply put, in service example 2, the content usage level designates means for outputting content integrated to Terminal 21 (namely E-mail transmitting/receiving unit 28) and allows Terminal 21 to output content only with the designated means. Therefore, the output of content can be controlled.

Although in this service example E-mail transmitting/receiving unit 28 and Communication unit 30 are employed as means for outputting content, the function is not limited to these units. It is possible that Communication unit 30 carries out communication by a short-range radio technique such as IrDA or Bluetooth™.

### (Service example 3)

In service example 3, Terminal 21 outputs a picture downloaded from Server 1 to a printing terminal. The printing terminal prints out the picture on a sticker to be provided to a user. The picture on the sticker may be an eye-catching one, such as a picture of a cartoon character, logo, or an illustration. It is preferred that a great number of the printing terminals be provided on streets. In this case a user goes to the nearest terminal with Terminal 21 to obtain a sticker on which the picture downloaded from Server 1 is printed. In this service, Terminal 21 is permitted to output content downloaded from Server 1 only to the printing terminal.

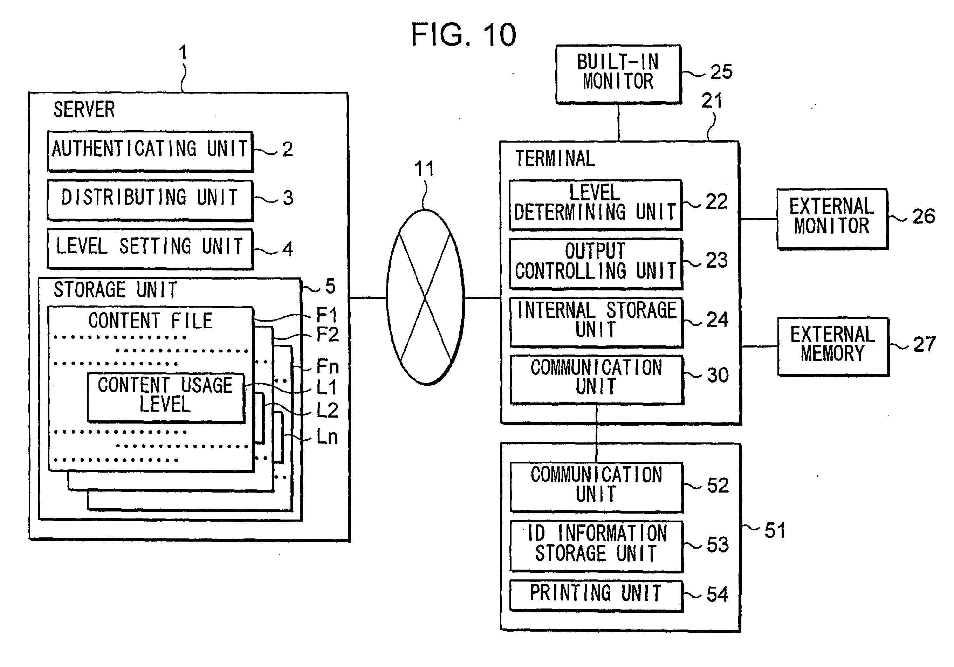

Fig. 10 shows an overall configuration of an information distributing system for describing service example 3. In the figure, like numerals of Fig. 1 are attached to like elements of Fig. 1, thus a detailed explanation is omitted.

As shown therein, the information distributing system includes Terminal 51 in addition to Server 1 and Terminal 21 shown in Fig. 1. Terminal 51 includes communication unit 52 for carrying out data communication with Terminal 21 via a cable, ID information storage unit 53 for storing identification information on terminals, and Printing unit 54 for printing out a picture onto a sticker.

Terminal 21 includes communication unit 30 for carrying out communication with Terminal 51 via a cable in addition to Level determining unit 22, Output controlling unit 23, and Internal storage unit 24 as shown in Fig. 1.

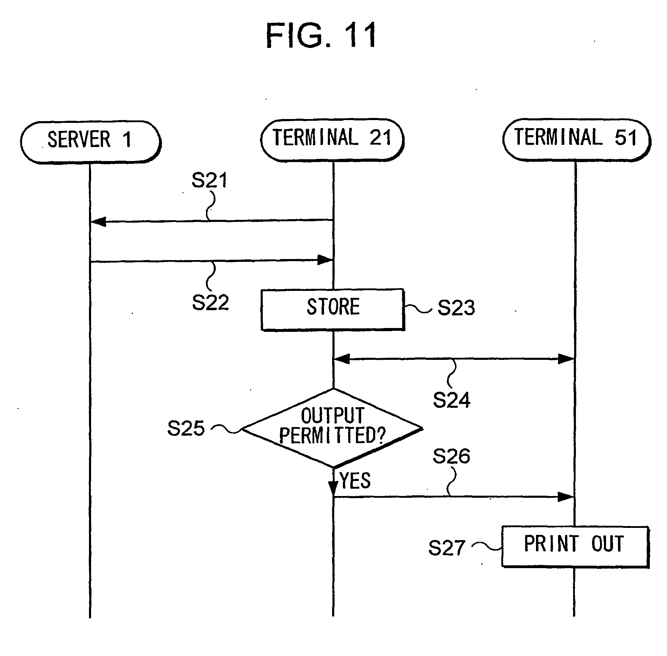

Operation of the information distributing system will now be described referring to a sequence diagram of Fig. 11.

As shown in Fig. 11, firstly Terminal 21 transmits a request for downloading content to Server 1 (step S21). Upon receipt of the request, Server 1 checks functions of Terminal 21 with Authenticating unit 2 and extracts from Storage unit 5 a content file storing content requested from Terminal 21. In the following description, content file F1 shall be extracted. Next, Server 1 transmits the extracted file F1 to terminal 21 with Distributing unit 3 (step S22).

Identification information of Terminal 51 and acontent usage level indicating that output of content is permitted only to a terminal having identification information is written in a comment area of file F1. Upon receipt of the information, Terminal 21 stores it in Internal storage unit 24 (step S23).

When a user of Terminal 21 wants to output file F1 stored in Internal storage unit 24 to terminal 51, the user connects Terminals 21 and 51 via a cable to establish a communication link between the terminals (step S24). After a communication link has been established Terminal 51 extracts the identification information from ID information storage unit and transmits the information to Terminal 21. Terminal 21 stores the information internal storage unit 24.

Next, the user carries out an operation for outputting file F1 to Terminal 51. According to the operation, Level determining unit 22 determines whether output of file F1 is permitted (step S25). As identification information written in the comment area of file F1 coincides with that stored in Internal storage unit 24, Level determining unit 22 determines that the output is permitted ("Yes" in step S25) and transmits file F1 to Terminal 51 (step S26). Terminal 51 prints out the picture onto a sticker, which is provided to a user (step S27).

Simply put, in service example 3, the content usage level designates an output device (Terminal 51) and allows Terminal 21 to output content only to the designated device. Therefore, the output of content is controlled.

It is possible that Communication unit 30 carries out communication by a short-range radio technique such as IrDA or Bluetooth™.

### (Service example 4)

In service example 4, Terminal 21 can output content as an e-mail attachment to a device only if the e-mail address of the device contains a specific domain name. The reason is as follows.

In providing e-mail service to users by an Internet provider, the provider usually assigns an e-mail address containing a domain name (specifically a domain name of a mail server managed by the provider) to each of the users. Often an Internet provider also a content provider provides a service of distributing content. If such a provider permits the circulation of content to all users of the provider, the users can exchange with each other their favorite content items. This is convenient for the user. Service example 4 pertains to the situation described above.

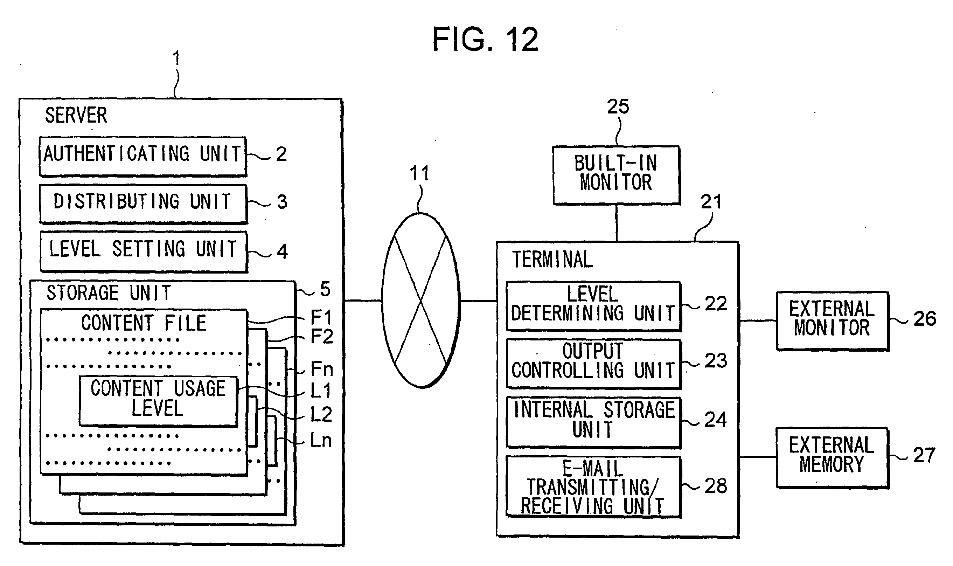

Fig. 12 shows an overall configuration of an information distributing system for providing service example 4. In this figure, like numerals of Fig. 1 are attached to like elements of Fig. 1, thus a detailed explanation is omitted. Terminal 21 includes E-mail transmitting/receiving unit 28 for exchanging e-mails in addition to Level determining unit 22, Output controlling unit 23, and Internal storage unit 24, functioning as a mail client. This system has a plurality of terminals functioning as a mail client except for Terminal 21, which is not shown in the figure, and Terminal 21 can exchange e-mails with these terminals.

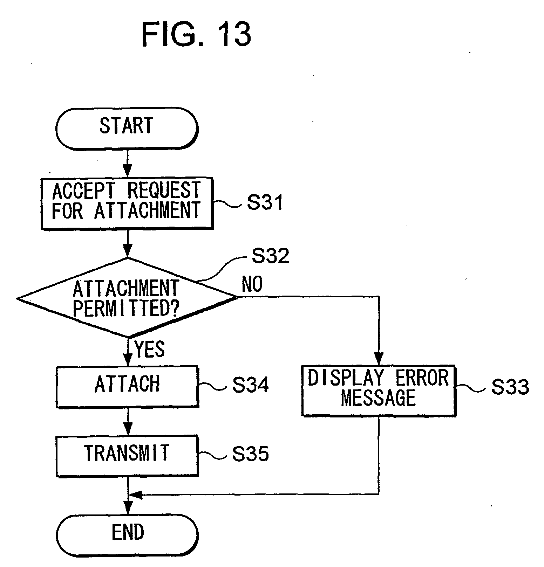

Operation of the information distributing system will now be described referring to a sequence diagram of Fig. 13.

It can be noted that in Fig. 13 Terminal 21 has stored in Internal storage unit 24 content file distributed by Server 1. The stored content file may be content file F1, the contents of which carry a domain name and a content usage level indicating that output of the content as an e-mail attachment to a device is permitted only if the e-mail address of the device contains the same domain name.

When a user of Terminal 21 wants to output to an external device, content file F1 as an e-mail attachment, the user operates Terminal 21 to create an e-mail. Specifically, at first, a user inputs an e-mail address of an output device (mail client) and carries out an operation for attaching file F1 to an e-mail stored on internal storage unit 24. Terminal 21 accepts and interprets these operations (step S31). Next, Level determining unit 22 determines whether attachment of file F1 to an e-mail is permitted (step S32). Specifically, Level determining unit 22 compares a domain name stored in the comment area with the domain name of the e-mail address of the output device. If both domain names are determined to be the same, Level determining unit 22 determines that attachment of the content to an e-mail is permitted. If on the other hand, if the domain names are different the attachment of the content to an e-mail is not permitted.

If the attachment is not permitted ("No" in step S32), Output controlling unit 23 displays an error message on Built-in monitor 25 (step S33).

If the attachment is permitted ("Yes" in step S5), Output controlling unit 23 permits the attachment of the content. Then, Terminal 21 attaches file F1 to an e-mail (step S34) and transmits it to the output device (mail client) (step S35).

As described above, in service example 4, the content usage level designates a part of the address (domain name) and allows Terminal 21 to output to an output device to which the same part of the address is assigned. By doing so, the output of content can be restricted to a specific device. It is possible that a whole address is used instead of a part of an address. In this case there is only one output device for the content.

### (Modifications)

In the foregoing embodiments, Patterns P1 through P5 are provided, each of which is defined as a combination of content usage levels. Needless to say, the configurations of the content usage levels comprising each pattern can be set in various ways. It is possible to write content usage levels directly on a comment area, instead of using identifiers as in P1 through P5 of the earlier embodiment. It is also possible that content usage levels are written to other areas of a content file instead of the comment area. For example, if the content of a file is a computer program in the Java™ programming language, the content usage levels may be written on a file called ADF. In this case, the ADF limits output of a Jar file in which the program source is stored on an external device.

Further, it is also possible that computer programs executed by Server 1 and Terminal 21 of the present invention are stored on magnetic tapes, magnetic disks, floppy disks, optical storage media, opt magnetic storage media, Digital Versatile Disks (DVDs), Random Access Memories (RAMs), and other suitable storage media to be read.

In the foregoing, according to the present invention, permissions on usage of content is given to each content to be distributed. By doing so, use of content is diversified without the infringement of the copyright of the content.

## Claims

1. An information distributing device comprising:
acontent usage level setting means for setting acontent usage level indicating a permission to output content; and
an information distributing means for distributing to an information processing terminal the content for which said content usage level is set.

2. The device of claim 1, wherein said content usage level comprises:
a level for permitting said terminal to store the content only in a storage unit within said terminal;
a level for permitting only a terminal with which the content was downloaded to replay the content;
a level for permitting only a single user to replay the content;
a level for permitting only devices following a same criteria to replay the content; and
a level for permitting any device to store the content.

3. The device of claim 1, wherein said content usage level comprises:
a level for permitting to output the image to a monitor of said terminal;
a level for permitting to output the image in a general analog form; and
a level for permitting to output the image in a general digital form.

4. The device of claim 1, wherein information on said content usage level is stored in a comment area of content file.

5. The device of claim 1, further comprising a determining means for determining that a receiver of the content has a function of outputting the content according to the content usage level; and wherein said distributing means distributes the content to said receiver on the basis of the determination result made by said determining means.

6. The device of claim 1, wherein said content usage level designates a receiver of the content and allows said information processing terminal to output the content to the receiver.

7. The device of claim 6, wherein said content usage level comprises at least one of:
a level for permitting said processing terminal to output the content to said information distributing device;
a level for permitting said information processing terminal to output the content to said designated receiver; and
a level for permitting said information processing terminal to output the content to a communication device to which an address for communication including at least a part of a designated address is assigned.

8. The device of claim 1, wherein said content usage level designates content outputting means of said information and allows said information processing terminal to output the content to a communication device.

9. The device of claim 8, wherein said content usage level comprises at least one of:
a level for permitting said information processing terminal to output content to the communication terminal using an e-mail transmitting/receiving means;
a level for permitting said information processing terminal to output content to the communication device using a communication means for transmitting content to a communication device directly.

10. An information processing terminal comprising:
means for specifying acontent usage level representing whether to permit output of content by referring to content file of the content; and
means for controlling output of the content according to the content usage level.

11. A method for storing content comprising the steps of:
downloading content in which a content usage level representing whether to permit output of the content is set; and
controlling output of the content according to the content usage level.

12. The method of claim 11, wherein the content usage level comprises:
a first level for permitting to store the content in an internal storage unit;
a second level for permitting to relay only on a terminal which has downloaded the content;
a third level for permitting only a single user to replay the content;
a fourth level for permitting communication devices following a same criteria to replay the content;
a fifth level for permitting any device to replay the content;
the content has at least one of:
a first identifier indicating that usage of the content is permitted on any of the first through the fifth levels;
a second identifier indicating that usage of the content is permitted on any of the first through the fourth levels;
a third identifier indicating that usage of the content is permitted on any of the first through the third levels;
a fourth identifier indicating that usage of the content is permitted on the first or the second level;
a fifth identifier indicating that usage of the content is permitted only on the first level;
if the first identifier is assigned to the content, content usage on any of the first through the fifth levels is permitted;
if the second identifier is assigned to the content, usage on any of the first through the fourth levels is permitted;
if the third identifier is assigned to the content, usage on any of the first through the third levels is permitted;
if the fourth identifier is assigned to the content, usage on both the first and
the second levels is permitted; and
if the fifth identifier is assigned to the content, usage on only the first level is permitted.

13. A method for outputting content comprising the steps of:
downloading content in which a content usage level indicating whether to permit usage of an image of the content is set; and
controlling output of the image according to the content usage level.

14. The method of claim 13, wherein the content usage level comprises:
a first level for permitting to output the image to a built-in monitor;
a second level for permitting to output the image in a general analog form;
a third level for permitting to output the image in a digital analog form;
the content has at least one of:
a first identifier indicating that usage of the content is permitted on any of the first through the fifth levels;
a second identifier indicating that usage of the content is permitted on both the first and the second levels;
a third identifier indicating that usage of the content is permitted on only the first level;
if the first identifier is assigned to the content, ausage on any of the first through the fifth levels is permitted;
if the second identifier is assigned to the content, a usage on the first and the second level is permitted;
if the third identifier is assigned to the content, a usage on only the first level is permitted.

15. Content data having information on a content usage level representing whether to permit usage of the content

16. The data of claim 15, wherein the content usage level comprises:
a level for permitting only terminal with which the content was downloaded to replay the content;
a level for permitting only a single user to replay the content;
a level for permitting only devices following a same criteria to replay the content; and
a level for permitting any device to store the content.

17. The data of claim 1, wherein said content is an image and said content usage level comprises:
a level for permitting to output the image to a built-in monitor of said terminal;
a level for permitting to output the image in a general analog form; and
a level for permitting to output the image in a general digital form.

18. A computer program product for enabling a computer to execute the functions of:
specifying a content output level indicating whether to permit usage of content by referring to content file of the content; and
controlling usage of the content according to the content usage level.

19. An information distributing system comprising:
an information distributing device comprising:
means for assigning to content a content usage level indicating whether
to permit usage of the content; and
means for distributing to an information processing terminal the content
in which the content usage level is assigned; and
an information processing terminal comprising:
means for specifying a content usage level of the distributed content; and
means for controlling usage of the content according to the content usage level.
